# NOUVEAU FASCICULE DE BREVET EUROPEEN

(11) **EP 0 738 108 B2**
(45) Date de publication et mention de la décision concernant l'opposition: **23.08.2006**
(45) Mention de la délivrance du brevet: 30.09.1998
(21) Numéro de dépôt: 95905177.2
(22) Date de dépôt: 28.12.1994
(51) Int. Cl.: A01N 25/34, E04B 1/72, A01M 1/24

(54) **PROCEDE POUR LA PROTECTION ANTI-TERMITE DES CONSTRUCTIONS**
VERFAHREN ZUM ANTITERMITENSCHUTZ VON BAUWERKEN
METHOD GIVING TERMITE PROTECTION TO BUILDINGS

(30) Priorité: 05.01.1994 FR 9400179
(43) Date de publication de la demande: 23.10.1996
(73) Titulaire: CECIL S.A., 38670 Chasse-sur-Rhône (FR)
(72) Inventeur: MARTINET, Pascal, F-38370 Les-Roches-de-Condrieu (FR); LIEUX, Olivier, F-42290 Sorbiers (FR); MARCOTTE, Guy, F-38440 Moidieu (FR)
(74) Mandataire: Richebourg, Michel François
(86) Numéro de dépôt international: PCT/FR1994/001541
(87) Numéro de publication internationale: WO 1995/018532

(56) Documents cités:
- WO-A-90/14004
- DE-B- 1 141 837
- GB-A- 1 568 936
- GB-A- 2 084 021
- US-A- 2 899 771
- US-A- 5 224 288
- PATENT ABSTRACTS OF JAPAN vol. 17, no. 443 (M-1463) 16 Août 1993 & JP,A,05 098 717 (FUKUVI CHEM IND) 20 Avril 1993
- DATABASE WPI Week 3586, Derwent Publications Ltd., London, GB; AN 86-230350 U35] & JP,A,61 162 123 (SUMITOMO ELEC IND) 22 Juillet 1986
- DATABASE WPI Week 2888, Derwent Publications Ltd., London, GB; AN 88-194650 & JP,A,63 132 803 (SHUNAN DENKO) 04 Juin 1988
- DATABASE WPI Week 2084, Derwent Publications Ltd., London, GB; AN 84-124820 U20] & JP,A,59 062 503 (IKARI YAKUHIN) 10 Avril 1984
- DATABASE WPI Week 3890, Derwent Publications Ltd., London, GB; AN 90-282545 & AU,A,4 865 590 (W.E.J.GROOM) 02 Août 1990
- Journal of Economic Entomology, Vol.61(4), p. 889-892, J.T. Whitlaw: "Selected Plastic Formulations for use as Mosquito Larvicides"

## Description

La présente invention est relative à la protection préventive anti-termite des constructions.

A l'heure actuelle, la protection des constructions à l'encontre de la pénétration des isoptères (termites) nuisibles est généralement opérée par épandage, pulvérisation ou injection de produits insecticides à des doses qui doivent se révéler suffisantes pour assurer une protection de plusieurs années. L'interdiction d'utilisation de certains insecticides efficaces mais présentant des nuisances toxiques et écotoxiques accentuées a amené à avoir recours à des substances moins dangereuses, mais moins stables chimiquement, de sorte qu'il y a lieu de renouveler les opérations à des intervalles de temps plus réduits, ce qui pose des problèmes délicats par suite de la dissémination, dans l'environnement, de matières indésirables.

De plus, ces traitements de renouvellement préventifs et curatifs sont effectués par définition après la construction du bâtiment, et il faut donc percer les murs, dalles etc..., ce qui se traduit par des travaux lourds, coûteux, provoquant des désagréments et dont l'efficacité totale est difficile à assurer, car on ne peut pas toujours percer le nombre recommandé de trous. Par ailleurs, après la construction, certains endroits peuvent se révéler être inaccessibles à de tels traitements curatifs et/ou préventifs.

Enfin, la tentation peut être grande, pour tenter d'augmenter l'efficacité des traitements curatifs et/ou préventifs, de surdoser le produit, notamment autour des endroits inaccessibles avec des risques évidents de pollution qui étaient précisément ceux que l'on souhaitait éviter.

Si l'on rappelle qu'il suffit d'un ou de quelques lieux de passage, très peu nombreux, non protégés, pour que les termites puissent investir une construction et y provoquer les dommages que l'on connaît, on mesure la gravité du problème et les lacunes obligatoirement graves des traitements préventifs de renouvellement et/ou curatifs même bien exécutés car la <<barrière chimique>> est difficilement continue.

C'est à ces inconvénients qu'entend remédier la présente invention, laquelle a pour objet un procédé de protection anti-termite des constructions, dont la mise en oeuvre intervient lors de l'édification des locaux eux-mêmes, et qui se caractérise de plus par le fait que cette protection est définitive et totale bien qu'elle ait recours à des termicides de nouvelle génération, cette combinaison de propriétés étant jusqu'à présent jugée impossible.

On savait en effet obtenir une protection totale et définitive avant la construction, mais uniquement par épandage, etc..., de substances maintenant prohibées.

On savait également utiliser des substances moins puissantes, mais à condition d'avoir recours à des traitements de renouvellement curatifs et/ou préventifs (le procédé n'était donc pas <<définitif>>) présentant des risques très importants de laisser subsister des couloirs de passage non-protégés (le procédé n'était donc pas <<total>>).

L'invention propose au contraire un procédé qui regroupent quatre propriétés essentielles, dont la réunion simultanée était jugée impossible :
1. Mise en oeuvre avant construction.
2. Utilisation de substances de nouvelle génération.
3. Traitement <<total>> (<<barrière chimique>> continue donc pas de passages non protégés)
4. Traitement <<définitif>> (pas de nécessité d'avoir recours à dés retraitements préventifs ou à des traitements curatifs en cas d'échec).

On connaît aussi divers matériaux plastiques à libération contrôlée de manière active. On connaît, notamment par le document FR-A-2 491 037 (ROUSSEL-UCLAF), des matériaux d'emballage et de revêtement à propriétés insecticides constitués par un film de matière plastique (polyéthylène par exemple) qui est imprégné dans la masse à l'aide d'un composé de type pyréthrinoide.

On connaît le document JP 59-62503 qui décrit un papier kraft imprégné de termicide et recouvert sur ses deux faces d'un film plastique. Le produit est supposé diffuser au travers du polyéthylène. Il s'agit d'un produit composite résistant et destiné à un usage « sous plancher » c'est-à-dire dans des zones précises. Il s'agit par ailleurs d'une technologie ancienne (1982) c'est-à-dire une date où des termicides puissants étaient autorisés, ainsi que des doses élevées, ces paramètres étant aujourd'hui sévèrement réglementés.

On connaît également le USP 5,224,288 qui, lui, présente le grand intérêt d'illustrer l'état de la technique à la veille (1993) de la présente invention. Ce brevet américain décrit un tapis fibreux imprégné de termicide. Les fibres sont impératives car seule cette structure assure à la fois une grande surface spécifique et une résistance mécanique suffisante. Par ailleurs, ce document précise que, impérativement, la dimension de maille de la structure fibreuse doit être plus petite que l'insecte ; faute de quoi l'insecte peut franchir la structure.

Ainsi, à la veille de l'invention, l'homme de métier comprenait :
- qu'il était impératif de disposer d'une grande surface spécifique pour diffuser une quantité suffisante de produit :
- que, malgré cette précaution, l'insecte pouvait parvenir au tapis fibreux et le franchir, ce qui démontre que la barrière chimique était jugée insuffisante ; peut-être en raison de la perte <<immédiate>> de produit <<par capillarité>> dans le sol.

Ainsi, l'homme de métier n'était pas dirigé vers une solution de type tapis fibreux ou film, et en était au contraire détourné.

La présente invention a pourtant pour objet l'application d'un film plastique insecticide à la protection anti-termite des constructions, par un procédé qui consiste à étendre le film sur la totalité de la surface constructible découverte par les travaux de terrassement nécessaires à l'érection de l'édifice, y compris dans les tranchées des fondations etc... et ce point est important comme on le verra ci-dessous.

Pour mesurer l'intérêt et l'originalité de l'invention, il faut se placer dans le contexte du problème posé et de son environnement technique.

Dans le cadre, par exemple, du brevet FR'037 précité, il s'agissait de protéger des substances par un film insecticide. Cependant, d'une part la mise en place du film pouvait être mécanisée, et elle avait lieu selon certaines procédures, et en usine : ainsi, une mise en place correcte du film était assurée et son activité insecticide garantie. Si une déchirure ou un défaut était constaté, l'emballage pouvait être simplement dérouté et refait. Quand bien même subsisterait un défaut non localisé, il en résulterait un dommage faible.

Au contraire, dans le secteur des travaux publics, il était invraisemblable de demander aux ouvriers du chantier de poser avec grand soin un film mince sur le sol et autour des fondations, de vérifier avec le plus grand soin qu'aucun fer à béton, caillou, débris etc... ne viendra perforer le film (nous rappellerons que les colonies de termites sont en perpétuelle expansion et que leur instinct les pousse à rayonner autour de la termitière - le sol humide et <<calme>> sous sous une construction leur convient particulièrement bien - et à se propager le long, préférentiellement, des canalisations etc... et que par conséquent un seul passage non protégé suffit pour une invasion par les termites), de disposer avec soin et précaution les remblais, matériaux de construction, ciment, etc... pour que ces matériaux ne viennent pas à leur tour perforer le film, c'est-à-dire de demander à des ouvriers de chantier de renoncer à leurs pratiques, par ailleurs liées à leur secteur technique et donc compréhensibles.

Cela était d'autant plus invraisemblable que des passages doivent être ménagés, dans les fondations notamment, pour le cheminement des canalisations, câbles etc... de toutes sortes, ce qui oblige à perforer, inciser, etc..., le film.

Enfin, un film à libération progressive de produit termicide, par définition, ne pouvait que libérer des doses faibles de produit par unité de temps comme confirmé par USP'288 précité ; on pouvait donc au mieux espérer un effet plus ou moins répulsif aux endroits où le film ne serait ni déchiré, perforé ou mal posé, ou ouvert aux canalisations, etc..., effet qui allait donc conduire tout simplement les insectes vers les endroits de déchirure, perforation, etc... où ils pourraient pénétrer sans dommage et investir, à l'évidence, la construction.

Il était donc évident pour l'homme de métier que la pose d'un film plastique à libération progressive ne pouvait, compte tenu de la profession considérée et de ses contraintes incontournables, présenter aucune garantie de succès.

La profession s'est donc accommodée des inconvénients des traitements curatifs.

C'est le grand mérite de la demanderesse que d'avoir vaincu les préjugés attachés au dépôt d'un film et décidé d'un programme de recherche malgré les investissements et les risques d'un échec presque certains selon le raisonnement des professionnels.

C'est également son grand mérite, et celui de l'invention, que d'avoir persévéré après avoir rencontré les difficultés prévues, d'avoir néanmoins développé de toutes pièces un programme d'essais original, et d'avoir finalement démontré que contre toute attente, le film termicide apporte la solution attendue.

Le dessin annexé, donné à titre d'exemple, permettra de mieux comprendre l'invention, les caractéristiques qu'elle présente et les avantages qu'elle est susceptible de procurer :
La Figure 1 de ce dessin est une coupe verticale schématique illustrant la mise en oeuvre théorique du système du procédé de protection anti-termite suivant l'invention.
La Figure 2 est comparable à la Figure 1, sauf en ce qu'elle représente la mise en oeuvre réelle avec les incidents rhédibitoires (déchirures, perforations, lés posés avec un recouvrement insuffisant, etc...) auxquels s'attendait l'homme de métier et qui sont en effet rencontrés.
La Figure 3 représente un agrandissement de la Zone A de la Figure 2 ainsi que les moyens détaillés utilisés dans le procédé de l'invention et leurs effets.

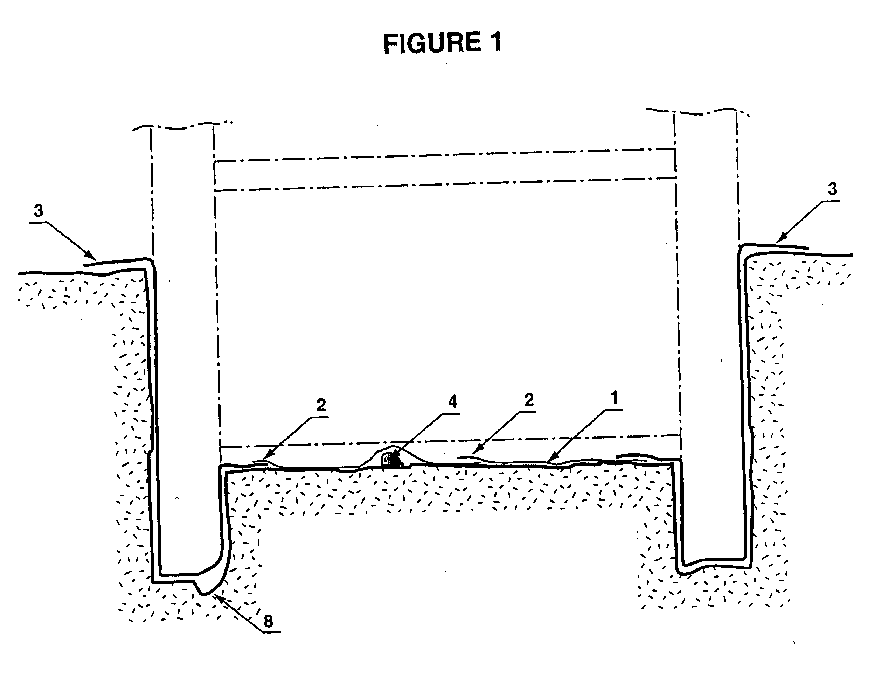

Sur la figure 1 on peut voir que dans l'excavation obtenue après les travaux de terrassement destinés à l'édification des fondations (en tracé interrompu) de la construction, on a étendu une série de lés 1 d'un film en une matière plastique imprégriée d'un produit insecticide. Ces lés 1 se chevauchent les uns les autres (2) et ils recouvrent toute la surface constructible, en débordant même largement au niveau du sol (3).

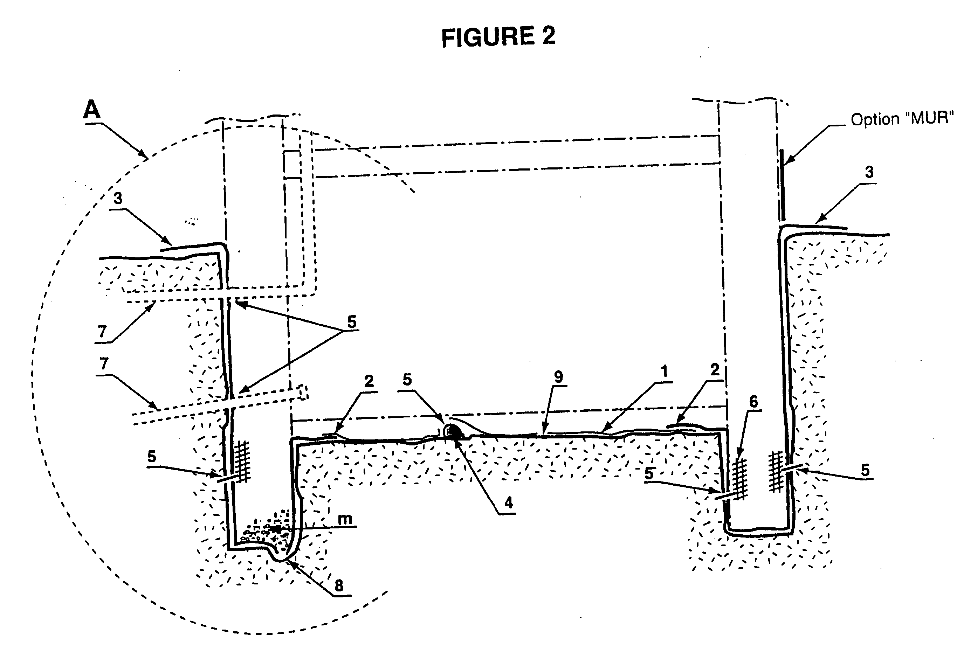

La Figure 2 montre ce que l'on rencontre dans la pratique. Certains lés (9) sont mal posés en recouvrement (pas, ou pas assez, de chevauchement). Des cailloux ou gravats (4) perforent le film. Lors de la mise en place des grillages et fers à béton (6), des protubérances perforent le film. Lors de la coulée des fondations, le film va s'écarter ou s'allonger sous la pression de la coulée m, et un risque de poinçonnement va apparaître aux endroits où existe une arête coupante sous le film (4) ou aux endroits, nombreux, où un vide subsiste sous le film (car il est évident que le fil m n'épouse pas étroitement un sol bien préparé ; il ne peut être que seulement posé sur un sol inégal encombré de gravats, et accidentellement de pièces métalliques etc...) comme illustré en (8). De toutes façons, le film doit être volontairement perforé pour laisser passer des canalisations ou gaines (7).

Chacun de ces incidents crée une fente, ouverture, déchirure (5) dont beaucoup sont imprévisibles et ne peuvent même pas être connues, et une seule de ces fentes, ouvertures, déchirures suffit pour permettre l'invasion par les termites.

Ainsi, le problème posé est d'atteindre le « zéro défaut » , ici le « zéro point de passage ». La Figure 2 montre à l'évidence la gageure que représentait cet objectif à la simple évocation de la pose d'un film.

L'invention repose sur la façon d'aborder le problème. Il existe deux catégories de risques de déchirure.
a) - les ouvertures volontaires telles que celles ménagées pour les gaines (7). Celles-ci ont au moins le mérite d'être connues. On aurait donc pu penser à un traitement local de la déchirure par colmatage, etc... mais la garantie, dans cette profession, n'aurait pas été totale.
b) - les déchirures accidentelles totalement imprévisibles. Contre celles-ci, aucune parade préventive n'était possible.

On savait également que, par définition, le film ne pouvait pas libérer une quantité importante de produit puisque la libération est progressive et que le film et son voisinage sont soumis à des effets de lavage par les eaux et l'humidité et autres pertes comme confirmé par le USP'288 précité. Enfin, les termicides sont dégradés aux pH très basiques des matériaux de construction.

On ne pouvait donc pas empêcher les déchirures, et on ne pouvait pas compter sur le produit libéré pour former une barrière suffisamment concentrée et étendue pour neutraliser les zones de déchirure.

La demanderesse a néanmoins décidé de vérifier ce dernier point et a découvert que, contre toute attente, le film traité anti-termites (décrit ci-dessous) était capable, *malgré* la libération progressive de faibles doses, de créer 1) un effet *répulsif* et 2) un effet de *contact et de choc.*

L'effet de contact observé de manière inattendue est essentiel. Selon les essais mis en oeuvre, l'insecte arrivant au voisinage immédiat du film est nettement perturbé après seulement 10 s d'exposition : difficulté à se mouvoir, troubles de l'orientation et perturbations analogues. Ceci est totalement contraire à l'enseignement du USP'288.

L'insecte atteint ainsi sans pouvoir s'enfuir, le laps de temps également très court au terme duquel se manifeste l'effet de choc léthal.

Ainsi, dans le cas extrêmement général où l'insecte se présente face à un film sain, il est soit repoussé, soit soumis à l'effet de contact puis à l'effet de choc. Dans le premier cas, il peut chercher une ouverture moins protégée et la trouver. Mais même dans ce cas, la demanderesse a établi que contrairement aux prévisions et connaissances, l'insecte était alors soumis très rapidement (quelques secondes seulement !) à l'effet de contact qui l'amenait à l'effet de choc.

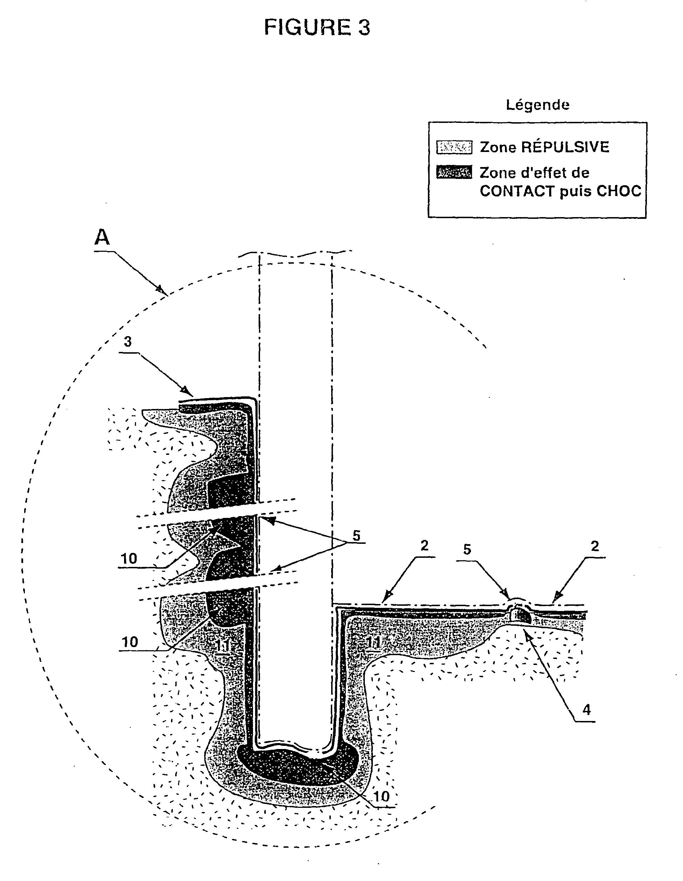

Ainsi, la demanderesse a établi que même selon une pratique de pose assez peu soignée, un film termicide conférait une protection totale et définitive, grâce à une double barrière schématisée sur la Figure 3, de répulsion (protection des ouvertures) et effet de contact et de choc (destruction).

Le film de matière plastique qui forme les lés 1 peut être obtenu par extrusion de polymères, notamment de polyoléfines comme le polyéthylène ou le polypropylène ou le polychlorure de vinyle et (co)polymères analogues, l'épaisseur étant comprise entre 50 µm et 300 µm. L'insecticide est intégré à la matière plastique lors de la fabrication du compound, le taux étant fonction de l'efficacité de la matière active utilisée. La fabrication du film se fait à partir de ce compound, par extrusion-soufflage à chaud ou par extrusion, l'une et l'autre extrusions pouvant être éventuellement suivies d'un calandrage à chaud et procédés analogues connus de l'homme de métier.

Les insecticides susceptibles d'être utilisés sont variables et sont ceux connus de l'homme de métier. On peut notamment avoir recours :
- soit à des insecticides de la famille chimique des pyréthrinoïdes du type de ceux décrits dans le document ROUSSEL-UCLAF cité plus haut (perméthrine, ou (±) Cis trans (dichloro 2,2 vinyl) - 3 dyméthyl-2,2 cyclopropane carboxylate de phénoxy-3 benzyle, de formule moléculaire C₂₁ H₂₀Cl₂O₃.
- soit à des insecticides de la famille chimique des carbamates, comme par exemple le Benfuracarbe (dihydro-2.3 diméthyl-2,2 benzofuranyl - 7 N - (N - (éthoxycarbonyl)-2 éthyl-N isopropylaminosulfényl)-N-méthylcarbonate), de formule moléculaire C₂₀H₂₀N₂O₅S.
- soit organohalogénés.
- soit organophosphorés.
- et produits analogues connus qu'il est inutile de détailler ici.

L'homme de métier saura naturellement choisir le mieux adapté et ces exemples ne sont pas limitatifs. On pourra également employer des mélanges.

Comme on l'a vu, des brèches doivent être nécessairement pratiquées dans le film formé par les lés 1, notamment pour le passage des canalisations d'alimentation (eau, gaz, électricité) et des canalisations d'évacuation. Pour éviter le moindre risque et être absolument certain de reconstituer le caractère continu de la barrière de protection formée par le film plastique, un mode préféré de l'invention consiste à traiter ces brèches lors du rebouchage (par exemple de la fondation) en incorporant au substrat (11) qui constitue le remblai de recouvrement des granulés (10) de matière plastique insecticide, avantageusement à raison de (environ) 1 volume de granulés pour 9 volumes de substrat. Les brèches doivent être comblées avec ce mélange sur une épaisseur et une profondeur d'environ 10 cm au moins.

Les granulés utilisés ont préférablement (ceci dépend de la nature du terrain, du degré de lavage par les eaux, et de l'appréciation de la dose libérée, facteurs que l'homme de métier pourra facilement déterminer par des essais de routine à la lecture des exemples et tableaux ci-après) des dimensions de l'ordre de environ 2 à 3 mm de diamètre sur une longueur de environ 2-5 mm. Leur composition chimique est similaire à celle du film qui constitue les lés 1. Il peut s'agir aussi de déchets de fabrication du film ou de rebuts de film, etc..., et analogues mais ceci n'est pas préféré (problèmes d'homogénéité des doses libérées). Par précaution, on pourra procéder de même aux endroits où le film est le plus exposé à une déchirure probable, comme en (8). On préférera des granulés et toutes géométries comportant des aspérités ou arêtes vives, comme par exemple des joncs tronçonnés.

Le grand avantage de cette variante est double : mise en oeuvre facile par les ouvriers du chantier, aucun soin particulier n'étant exigé et utilisation préférée des déchets etc... du film.

Après ces opérations *simples,* les travaux de maçonnerie peuvent être repris.

Les avantages secondaires obtenus par ce procédé de protection anti-termite par rapport aux systèmes classiques d'épandage de composés insecticides en phase liquide se révèlent également indiscutables.
- Les matières actives insecticides sont protégées des agressions extérieures par la matière plastique du film auquel elles sont intégrées, ledit film autorisant une lente diffusion.
- Les quantités de produits insecticides sont très nettement inférieures à celles mises en oeuvre selon le processus classique. Les tableaux suivants et les exemples permettront facilement la comparaison.
- Le risque de pollution des sols et des nappes phréatiques est très réduit du fait que les insecticides retenus prisonniers dans la matière plastique ne sont libérés qu'à très faible dose.
- Le risque de contamination de l'environnement au cas d'un accident intervenant au cours du transport du film insecticide est absolument nul, alors que ce risque est maximal dans le cas du transport d'insecticides liquides destinés à être épandus.
- La barrière protectrice formée par les lés 1 est particulièrement visible lors de travaux complémentaires de terrassement, de sorte que sa reconstitution reste aisée.
- Cette barrière de protection est susceptible d'être facilement éliminée en cas de démolition.

Les essais suivants ont été réalisés par la demanderesse :

### a) - Étude de l'activité insecticide sur Réticulitermes santonensis d'un film de polyéthylène traité avec de la perméthrine

On utilise plusieurs films de polyéthylène de 200 µm d'épaisseur contenant différentes quantités de perméthrine. Ces films ont été obtenus selon le procédé décrit précédemment On utilise également un film témoin de polyéthylène ne contenant pas de matière active biocide.

Le film à tester est emprisonné entre 2 tubes en verre ouverts aux extrémités, d'un diamètre intérieur de 50 mm, et d'une hauteur de 50 mm (S = 19,63 cm2). A la surface du film, est déposé une entretoise en matériau neutre de 1 mm d'épaisseur, et qui supporte un disque de papier filtre humidifié à saturation. Le papier filtre qui n'est donc pas en contact avec le film traité sert, après réhumidification quotidienne, de nourriture et de réserve d' eau aux insectes nécessaires à l'expérimentation. Après introduction dans chacun des dispositifs de 25 ouvriers Réticulitermes santonensis en bon état sanitaire, un couvercle en mousse de polyuréthanne vient coiffer chacun des montages. Le taux de mortalité est vérifié à 6 heures, 12 heures, 24 heures, puis chaque jour durant 7 jours, à compter de la date d'introduction des insectes dans les dispositifs expérimentaux. Pour chaque concentration de biocide dans la matière plastique, ont été effectuées deux répétitions de l'essai qui, lui-même, met en oeuvre quatre dispositifs expérimentaux de 25 termites par concentration.

Le tableau suivant résume les résultats expérimentaux obtenus.

| Matière plastique : polyéthylène Matière active biocide : perméthrine | | | | | | | |
|---|---|---|---|---|---|---|---|
| Dose de biocide en % (m/m) dans le support | % de mortalité | | | | | | |
| | 6 H | 12 H | 24 H | 2 J | 3 J | 4 J | 7 J |
| 0.005 | 0 | 0 | 4 | 36 | 52 | 64 | 84 |
| 0,05 | 0 | 0 | 8 | 60 | 88 | 96 | 100 |
| 0,25 | 20 | 36 | 84 | 100 | | | |
| 0,50 | 52 | 88 | 100 | | | | |
| 1,00 | 100 | | | | | | |
| Témoins | 0 | 0 | 0 | 0 | 0 | 2 | 8 |

### CONCLUSIONS :

A la dose de 1 % de perméthrine incorporée au polyéthylène, le matériau utilisé dans le procédé de l'invention présente des caractéristiques anti-termites satisfaisantes.

### b) - Étude de l'activité insecticide sur Réticulitermes santonensis d'un film de polyéthylène traité avec du Benfuracarbe

La méthodologie d'essai est la même que celle citée précédemment ; les films sont obtenus selon le procédé décrit plus haut.

Le tableau suivant résume les résultats expérimentaux obtenus.

| Dose de biocide en % (m/m) dans le support | % de mortalité | | | | | | |
|---|---|---|---|---|---|---|---|
| | 6 H | 12 H | 24 H | 2 J | 3 J | 4 J | 7 J |
| 0.005 | 0 | 0 | 0 | 4 | 12 | 20 | 65 |
| 0,05 | 50 | 64 | 100 | | | | |
| 0,25 | 100 | | | | | | |
| 0,50 | 100 | | | | | | |
| 1,00 | 100 | | | | | | |
| Témoins | 0 | 0 | 0 | 0 | 0 | 2 | 8 |

### CONCLUSIONS :

A la dose de 1 % de benfuracarbe incorporée au polyéthylène le matériau utilisé dans le procédé de l'invention présente des caractéristiques anti-termites satisfaisantes.

### b) - Étude de l'influence du délavage par les eaux d'infiltrations sur l'activité insecticide du matériau plastique mise en oeuvre par le procédé sujet de l'invention

Des échantillons de films traités comme décrits précédemment sont emprisonnés dans de la mousse polyuréthanne. Ils sont introduits verticalement dans des tubes en verre de diamètre 50 mm, et de hauteur 50 mm, à raison de 4 échantillons par tube, traités aux mêmes doses et avec le même principe actif. Un dispositif distributeur de liquide par goutte à goutte est installé au sommet de ce montage expérimental. A l'aide du dispositif précité, on laisse percoler au travers de la mousse supportant les films 8 litres d'eau déminéralisée, durant une période de 48 heures, a raison de 40 gouttes par minute. Cette quantité d'eau représente, par rapport à la surface expérimentale, la moyenne approchée des hauteurs d'eau reçues en 5 ans au mètre carré, par différentes villes d'Europe occidentales communément reconnues termitées.

A la suite de cette épreuve de délavage, les films sont retirés des montages, et séchés sans être essuyés.

L'activité insecticide est ensuite vérifiée selon la méthode décrite au paragraphe a) ci-dessus.

Le tableau suivant résume les résultats expérimentaux obtenus.

| Matière plastique : polyéthylène | | | | | | | | |
|---|---|---|---|---|---|---|---|---|
| Nature du biocide | Dose de biocide en % (m/m) dans le support | % de mortalité | | | | | | |
| | | 6 H | 12H | 24 H | 2 J | 3 J | 4 J | 7 J |
| Perméthrine | 0,05 | 0 | 0 | 0 | 8 | 8 | 11 | 32 |
| | 0,25 | 0 | 0 | 13 | 37 | 69 | 100 | |
| | 0,50 | 30 | 56 | 72 | 90 | 100 | | |
| | 1,00 | 100 | | | | | | |
| Benfuracarbe | 0,05 | 0 | 0 | 0 | 36 | 49 | 78 | 94 |
| | 0.25 | 0 | 0 | 2 | 46 | 71 | 99 | 100 |
| | 0,50 | 16 | 24 | 30 | 68 | 100 | | |
| | 1,00 | 31 | 44 | 52 | 100 | | | |
| Témoins traités | | 0 | 1 | 1 | 1 | 1 | 1 | 4 |

### CONCLUSIONS

A la dose de 1 % de perméthrine ou de benfuracarbe incorporée au polyéthylène, le matériau utilisé dans le procédé selon l'invention présente des caractéristiques anti-termites satisfaisantes après l'épreuve de délavage subie.

### d) - Étude de l'activité insecticide sur Réticulitermes santonensis de particules de polyéthylène traitées avec différents biocides, en mélange avec un substrat

Les particules de dimensions suivantes : diamètre 2,5 mm, longueur 4 mm, obtenues selon la méthode précédemment citée, sont incorporées à du sable de Fontainebleau humidifié (1 volume d'eau pour 4 volumes de sable) à raison de 1 volume de granulés pour 9 volumes de sable. Ce mélange correctement homogénéisé, vient remplir entièrement un tube en verre de 50 mm de diamètre et 350 mm de hauteur. A la base de ce tube, vient s'adapter un autre cylindre de verre de 50 mm de diamètre et de 50 mm de hauteur, garni de sable humide qui contient un bloc de bois appât. On aura soin d'intercaler entre les deux tubes une membrane de papier filtre qui tiendra lieu de témoin de passage. Le montage est coiffé d'un autre tube de verre (50 mm de diamètre et 50 mm de hauteur), contenant une rondelle de mousse polyuréthanne épousant le diamètre intérieur du tube, et de 25 mm d'épaisseur. Cette rondelle est traversée par 2 trous de diamètre 3 mm et une parcelle de bois provenant de l'élevage de Réficulitermes santonensis est fichée au centre de sa face supérieure. Une population de 150 ouvriers Réticulitermes santonensis en bon état sanitaire est introduite par l'ouverture supérieure du dispositif expérimental que l'on coiffe en final d'un couvercle découpé dans de la mousse polyuréthanne.

La profondeur de pénétration dans le substrat traité et le taux de mortalité sont cantrôlés à la fin de la période expérimentale de 4 semaines. Pour chaque biocide testé, et à chacune des concentrations de biocide dans la matière plastique, 4 dispositifs expérimentaux ont été mis en oeuvre. Chacun des essais a été répété deux fois. Lors de chaque répétition, 4 dispositifs dépourvus de tout biocide ont servi de témoins.

Le tableau suivant résume les résultats expérimentaux obtenus.

| Nature du biocide | Dose de biocide en % (m/m) dans le granulé | Profondeur de pénétration dans le substrat en mm | Taux de survie des termites |
|---|---|---|---|
| Perméthrine | 0,25 | 150 | 18,00 % |
| | 1,00 | 10 | 8,00 % |
| Benfuracarbe | 0,25 | 199 | 11,4 % |
| | 1,00 | 16 | 8,4 % |
| Témoins traités | | 400 | 80,8 % |

### CONCLUSIONS

A la dose de 1 % de perméthrine ou de benfuracarbe incorporé aux particules de polyéthylène, le matériau employé dans le procédé selon l'invention mélangé au sable dans les proportions définies précédemment, confère au substrat des caractéristiques anti-termites satisfaisantes.

Ces essais montrent l'activité du film chargé à 1 % aussi bien que des granulés (10) qui peuvent être utilisés en mélange avec le remblai (11), ainsi que la bonne tenue au délavage.

On a remarqué que l'effet répulsif était efficace quelle que soit, pratiquement, la dose appliquée.

L'homme de métier saura déterminer facilement les doses nécessaires aux effets de « contact » et de « choc » décrits selon l'invention, par des essais de routine basés sur les exemples ci-dessus et de simples échantillons de sols etc....

La dose d'imprégnation pourra être aussi faible que environ 0,5 %, la limite supérieure étant dictée par des considérations économiques et de normalisation, par exemple environ 2 %, de préférence 1 %.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

En particulier, on pourra faire remonter le film sur une dizaine de centimètres le long du mur, au-dessus du sol. On pourra également développer des barrières plus ou moins verticales à une certaine distance tout autour de l'endroit à protéger, sur une profondeur appropriée connue de l'homme du métier. On opérera par pose verticale d'un film utilisé dans le procédé selon l'invention dans une tranchée protégeant à toute distance souhaitée tout le pourtour de la zone considérée, et en remblayant avec éventuellement adjonction de granulés utilisés dans le procédé selon l'invention aux endroits particulièrement menacés. On pourra aussi seulement creuser une tranchée et remblayer avec adjonction des granulés utilisés dans le procédé selon l'invention. On peut ainsi mieux protéger les nouveaux travaux et/ou effectuer des traitements de "renouvellement" en combinaison avec, ou en remplacement, de la méthode ancienne.

## Revendications

1. Procédé pour la protection anti-termite des constructions, **caractérisé en ce qu'**il consiste à étendre, préalablement à l'érection de l'édifice, sur la totalité de la surface constructible découverte par les travaux de terrassement, y compris dans les tranchées des fondations, un film de matière plastique qui est imprégné dans la masse d'un composé insecticide, l'ensemble étant capable de diffuser lentement l'insecticide à une concentration de 0,5 % à 2% d'insecticide.

2. Procédé pour la protection anti-termite des constructions, **caractérisé en ce qu'**il consiste à étendre, préalablement à l'érection de l'édifice, sur la totalité de la surface constructible découverte par les travaux de terrassement, y compris dans les tranchées des fondations, un film de matière plastique qui est imprégné dans la masse d'un composé insecticide, à une concentration de 1% d'insecticide, l'ensemble étant capable de diffuser lentement l'insecticide.

3. Procédé suivant la revendication 1 ou 2 **caractérisé en ce que** le film est constitué par une série de lés (1) chevauchants (2) qui débordent largement (3) au niveau du sol.

4. Procédé selon l'une quelconque des revendications 1 à 3 **caractérisé en ce que** la matière plastique est choisie parmi les polyoléfines comme le polyéthylène ou le polypropylène, le chlorure de polyvinyle et (co)polymères analogues.

5. Procédé selon l'une quelconque des revendications 1 à 4 **caractérisé en ce que** l'insecticide est un termicide choisi parmi les pyrethrinoïdes comme la perméthrine, et les carbamates comme le benfuracarbe, les organohalogénés ou les organophosphorés et analogues.

6. Procédé selon l'une quelconque des revendications 1 à 5 (**caractérisé en ce que** la matière plastique est à base de polyéthylène et l'insecticide est la perméthrine.

7. Procédé selon l'une quelconque des revendications 1 à 6 **caractérisé en ce que** l'on utilise un film de polyéthylène chargé de environ 0,5 à 2 %, de préférence environ 1 % de perméthrine.

8. Procédé selon l'une quelconque des revendications 1 à 7 **caractérisé en ce que**, de plus, on remblaie le site de la construction par un mélange de substrat de remblai normal (11) et de granulés ou matières de géométries analogues de matière plastique imprégnée d'insecticide (10), au niveau des zones où le film est, soit volontairement perforé, soit risque d'être perforé ou interrompu accidentellement.

9. Procédé selon la revendication 8, **caractérisé en ce que** lesdits granulés ou matières ont la même composition que le film lui-même, et éventuellement proviennent de fragments, déchets ou résidus ou rebuts de sa fabrication.

10. Application des procédés selon l'une quelconque des revendications 1 à 9 aux constructions nouvelles et/ou aux traitements de renouvellement curatifs et/ou préventifs et/ou à la protection de zones par barrières verticales profondes.

## Claims

1. Method for protecting buildings against termites, **characterised in that** it comprises laying, prior to the erection of the building, over the entire building surface exposed by digging operations, including trenches for the foundations, a film of plastic material which is impregnated throughout with an insecticide compound, at an insecticide concentration of 0.5% to 2%, the entire arrangement allowing the insecticide to diffuse slowly.

2. Method for protecting buildings against termites, **characterised in that** it comprises laying, prior to the erection of the building, over the entire building surface exposed by digging operations, including trenches for the foundations, a film of plastic material which is impregnated throughout with an insecticide compound, at a an insecticide concentration of 1%, the entire arrangement allowing the insecticide to diffuse slowly.

3. Method according to claim 1 or 2, **characterised in that** the film is formed by a series of overlapping (2) sheets (1) which project substantially at ground level (3).

4. Method according to any one of claims 1 to 3, **characterised in that** the plastic material is chosen from the polyolefins, such as polyethylene or polypropylene, polyvinyl chloride and analogous (co)polymers.

5. Method according to any one of claims 1 to 4, **characterised in that** the insecticide is a termicide chosen from the pyrethrins, such as permethrin, and the carbamates, such as benfuracarbe, the organohalogens or the organophosphorus compounds and the like.

6. Method according to any one of claims 1 to 5, **characterised in that** the plastic material is polyethylene-based and the insecticide is permethrin.

7. Method according to any one of claims 1 to 6, **characterised in that** a polyethylene film is used laden with about 0.5 to 2%, preferably about 1%, of permethrin.

8. Method according to any one of claims 1 to 7, **characterised in that**, additionally, the building site is filled with a mixture of a substrate of normal filler (11) and granules (10) or materials of similar geometry of plastic material impregnated with insecticide, at the level of the zones where the film is either deliberately perforated or risks being accidentally perforated or interrupted.

9. Method according to claim 8, **characterised in that** said granules or materials have the same composition as the film itself, and optionally originate from fragments, waste, residues or rejects formed in the manufacture thereof.

10. Application of the methods according to any one of claims 1 to 9 to new buildings and/or curative and/or preventive renewal treatments, and/or to the protection of zones by deep vertical barriers.

## Patentansprüche

1. Verfahren zum Schutz von Bauwerken gegen Termiten,
**dadurch** charakterisiert, dass eine Schicht aus einem plastischen Stoff, welcher mit einer Insektizidmischung mit einer Konzentration des Insektizids von 0,5 % bis 2 % imprägniert ist, vorzugsweise vor der Errichtung des Bauwerkes auf der gesamten Baufläche, die durch den Erdhub freigelegt ist, einschließlich in den Fundamentgräben, ausgebreitet wird, wobei sich **dadurch** das Insektizid langsam verteilt.

2. Verfahren zum Schutz von Bauwerken gegen Termiten,
**dadurch** charakterisiert, dass eine Schicht aus einem plastischen Stoff, welcher mit einer Insektizidmischung mit einer Konzentration des Insektizids von 1 % imprägniert ist, vorzugsweise vor der Errichtung des Bauwerkes auf der gesamten Baufläche, die durch den Erdhub freigelegt ist, einschließlich in den Fundamentgräben, ausgebreitet wird, wobei sich **dadurch** das Insektizid langsam verteilt.

3. Verfahren nach Anspruch 1 oder 2,
**dadurch** charakterisiert, dass sich der Film durch eine Reihe von sich überlappenden (2) Bahnen (1) zusammensetzt, die sich größtenteils bis auf die Bodengleiche (3) erstrecken.

4. Verfahren nach irgendeinem der Ansprüche 1 bis 3, **dadurch** charakterisiert, dass das plastische Material aus der Gruppe der Polyolefine, welche Polyethylen, Polypropylen, Polyvinylchlorid und/oder analoge (Co-)Polymere umfasst, gewählt wird.

5. Verfahren nach irgendeinem der Ansprüche 1 bis 4,
**dadurch** charakterisiert, dass das Insektizid ein Termizid ist, welches aus der Gruppe der Pyrethroide, welche Permethrin umfasst, aus der Gruppe der Carbamate, welche Benfuracarb umfasst, aus der Gruppe der Organohalogenide, aus der Gruppe der Organophosphate und/oder Analoga gewählt wird.

6. Verfahren nach irgendeinem der Ansprüche 1 bis 5,
**dadurch** charakterisiert, dass das plastische Material auf Polyethylen basiert und das Insektizid Permethrin ist.

7. Verfahren nach irgendeinem der Ansprüche 1 bis 6,
**dadurch** charakterisiert, dass ein Film aus Polyethylen verwendet wird, der mit ungefähr 0,5 bis 2 %, vorzugsweise ungefähr 1 % Permethrin beladen wird.

8. Verfahren nach irgendeinem der Ansprüche 1 bis 7,
**dadurch** charakterisiert, dass der Bauplatz überdies mit einer Mischung aus üblichem Aufschüttmaterial (11) und mit mit Insektizid imprägniertem Granulat oder plastischem Material (10) analoger äußerer Form bis auf die Höhe des Films aufgeschüttet wird, wo der Film entweder absichtlich durchbrochen ist, oder wo die Gefahr besteht, dass der Film versehentlich durch- oder unterbrochen ist.

9. Verfahren nach Anspruch 8,
**dadurch** charakterisiert, dass das Granulat oder die plastischen Materialien die gleiche Zusammensetzung wie der Film haben und gegebenenfalls aus Teilen, Abfällen, Rückständen oder Ausschuss aus der Herstellung des Films herrühren.

10. Verwendung des Verfahrens nach irgendeinem der Ansprüche 1 bis 9 bei der Neuerrichtung von Bauwerken und/oder bei schadensbehebenden und/oder vorsorglichen Umbaumaßnahmen und/oder zum Bereichsschutz durch tiefliegende vertikale Barrieren.
